# EUROPEAN PATENT APPLICATION

(11) **EP 4 730 148 A1**
(43) Date of publication of application: **22.04.2026**
(21) Application number: 24822315.8
(22) Date of filing: 14.03.2024
(51) Int. Cl.: G06F 16/23

(54) **DATA WRITING METHOD AND APPARATUS, COMPUTER DEVICE, AND STORAGE MEDIUM**

(30) Priority: 16.06.2023 CN 202310723602
(71) Applicant: Huawei Technologies Co., Ltd., Shenzhen, Guangdong 518129 (CN)
(72) Inventor: LI, Xiuchang, Shenzhen, Guangdong 518129 (CN)
(74) Representative: Körber, Martin Hans
(86) International application number: PCT/CN2024/081747
(87) International publication number: WO 2024/255357

(57) **Abstract**

Embodiments of this application disclose a data write method and apparatus, a computer device, and a storage medium, and pertain to the field of database technologies. In embodiments of this application, when any thread in the computer device obtains no available memory page from a plurality of idle memory pages corresponding to a target data table, the thread may extend N idle data pages for the thread, extend an idle memory page based on the N idle data pages, and write data into the extended idle memory page. It can be learned that the any thread that fails to obtain the available memory page may automatically trigger a data table extension procedure to extend N data pages for the thread in time for use by the thread. In addition, because no data page needs to be extended for another thread, duration required by each thread to extend a data page is short. This can shorten thread blocking duration, thereby improving data write performance.

## Description

This application claims priority to Chinese Patent Application No. 202310723602.9, filed with the China National Intellectual Property Administration on June 16, 2023 and entitled "DATA WRITE METHOD AND APPARATUS, COMPUTER DEVICE, AND STORAGE MEDIUM", which is incorporated herein by reference in its entirety.

### TECHNICAL FIELD

This application relates to the field of databases, and in particular, to a data write method and apparatus, a computer device, and a storage medium.

### BACKGROUND

Currently, a file is usually stored in a database in a form of data table. One data table includes a plurality of data pages, the plurality of data pages are persistently stored in a disk, and each data page may correspond to one memory page. When a computer device updates a data page, the computer device may load the data page to a corresponding memory page for update.

In a related technology, an idle memory page corresponding to an idle data page in a data table may be managed by using a page binary tree. When a plurality of threads in the computer device need to write data into a same data table, the plurality of threads may separately search, based on a data amount of to-be-written data by using the page binary tree, for an available memory page that has sufficient space. As a result, the plurality of threads may find a same available memory page. In this case, the plurality of threads may queue up to sequentially acquire a write lock on the available memory page, and write the data into the available memory page after successfully acquiring the write lock. Based on this, if the available memory page is the last idle memory page corresponding to the data table, and after a thread completes writing data, a remaining capacity of the available memory page is insufficient for a plurality of subsequent threads to write data, the plurality of subsequent threads simultaneously apply for extending the data table. In this case, one of the threads extends a plurality of idle data pages for the plurality of threads at a time based on a quantity of threads that apply for extending the data table, while all other threads wait. Consequently, the data table is not extended in time.

### SUMMARY

This application provides a data write method and apparatus, a computer device, and a storage medium, to improve data write performance when a plurality of threads concurrently write data into one data table.

To achieve the foregoing objective, the following technical solutions are used in this application.

According to a first aspect, a data write method is provided. The method may be applied to a first thread in a computer device. The first thread is any one of a plurality of threads that run in the computer device and that are to write data, and the method includes: if no available memory page is obtained from a plurality of idle memory pages corresponding to a target data table, extending N idle data pages for the first thread in the target data table, where N is a preset integer greater than 0; extending an idle memory page for the target data table based on the N idle data pages; and writing data into the extended idle memory page.

In this application, when any thread in the computer device obtains no available memory page from the plurality of idle memory pages corresponding to the target data table, the thread may extend N idle data pages for the thread, extend an idle memory page based on the N idle data pages, and write data into the extended idle memory page. It can be learned that any thread that fails to obtain an available memory page may automatically trigger a data table extension procedure to extend N data pages for the thread in time for use by the thread. In addition, because no data page needs to be extended for another thread, duration required by each thread to extend a data page is short. In comparison with a solution in which one thread centrally extends data pages for all threads that obtain no available memory page while all other threads wait, this can shorten thread blocking duration, thereby improving data write performance.

Optionally, an implementation process of extending the N idle data pages for the first thread in the target data table may include: acquiring a write lock on the target data table; if the write lock on the target data table is successfully acquired, applying for N extended storage areas in a persistent storage device for the target data table; writing 0 into the N extended storage areas, to obtain the N idle data pages; and releasing the write lock on the target data table.

In this application, when extending an idle data page, the first thread first acquires a lock on the target data table, to avoid a read/write conflict caused when another thread accesses the target data table in a table extension process. In addition, a process of extending a data table by the first thread includes two sub-procedures: extending an idle data page in the persistent storage device, and allocating a memory page to the idle data page and updating a page binary tree. Based on this, when extending the idle data page in the persistent storage device, the first thread acquires the write lock on the target data table, but does not acquire a write lock on the page binary tree corresponding to the target data table. In this way, in a process in which the first thread extends the idle data page, another thread that completes data page extension may update the page binary tree. In this way, different threads may execute different sub-procedures in the data table extension procedure at different time, so that data table extension efficiency can be improved.

Optionally, an implementation process of extending the idle memory page for the target data table based on the N idle data pages may include: allocating corresponding memory pages to the N idle data pages; and updating, based on the corresponding memory pages of the N idle data pages, the page binary tree corresponding to the target data table, where the page binary tree corresponding to the target data table includes a plurality of page nodes, and each page node indicates one idle memory page corresponding to the target data table.

Optionally, an implementation process of updating, based on the corresponding memory pages of the N idle data pages, the page binary tree corresponding to the target data table may include: acquiring the write lock on the page binary tree corresponding to the target data table; if the write lock on the page binary tree corresponding to the target data table is successfully acquired, adding, to the page binary tree corresponding to the target data table, page nodes corresponding to the corresponding memory pages of the N idle data pages; and releasing the write lock on the page binary tree corresponding to the target data table.

In this application, the first thread first acquires the write lock on the page binary tree before updating the page binary tree, to avoid a conflict caused when a plurality of threads simultaneously update the page binary tree of the target data table. In addition, the process of extending the data table by the first thread includes two sub-procedures: extending a data page in the persistent storage device, and allocating a memory page to the extended data page and updating the page binary tree. Based on this, when updating the page binary tree, the first thread acquires the write lock on the page binary tree, but does not acquire the write lock on the target data table. In this way, in a process in which the first thread updates the page binary tree, another thread that triggers the data table extension procedure may extend the data page. In this way, different threads may execute different sub-procedures in the table extension procedure at different time, so that data table extension efficiency is improved.

Optionally, the method further includes: searching the plurality of idle memory pages corresponding to the target data table for an available memory page; if a write lock on a currently-found available memory page fails to be acquired, counting a cumulative quantity of available memory pages on which write locks fail to be acquired; and if the cumulative quantity of the available memory pages on which the write locks fail to be acquired is greater than a reference threshold, determining that no available memory page is obtained from the plurality of idle memory pages corresponding to the target data table.

In this application, the first thread does not need to wait to extend the data table until it is determined that the last idle memory page is used up, but may directly trigger the data table extension procedure when a write lock on a found available memory page fails to be acquired a plurality of times and a quantity of failures exceeds a threshold. In other words, the first thread may trigger data table extension in advance when there are still a small quantity of idle memory pages in the data table. This can resolve a problem that waiting duration is long because one thread performs extension after the last idle memory page is used up and the other threads wait in a centralized manner.

According to a second aspect, a data writing method is provided. The method may be applied to a first thread of a computer device, and the first thread is any one of a plurality of threads that run in the computer device and that are to write data. The first thread may search a plurality of idle memory pages corresponding to a target data table for an available memory page; search the plurality of idle memory pages for another available memory page if a write lock on a currently-found available memory page fails to be acquired; and write data into another available memory page on which a write lock is successfully acquired.

The first thread is a transaction thread of a database application running on the computer device, and the transaction thread is used to write data into the target data table. Based on this, the first thread may search the plurality of idle memory pages corresponding to the target data table for the available memory page. If the write lock on the currently-found available memory page fails to be acquired, it indicates that another thread is accessing the available memory page. In this case, the first thread does not wait for the another thread to release the lock on the available memory page, but directly searches the plurality of idle memory pages for the another available memory page, and writes the data into the another available memory page on which the lock is successfully acquired. This can shorten waiting time of the first thread, thereby improving data write performance.

Optionally, when searching the plurality of idle memory pages for the another available memory page, the first thread may search for a target page node starting from a next page node of a first page node in a page binary tree corresponding to the target data table, where the page binary tree corresponding to the target data table includes a plurality of page nodes, each page node indicates one idle memory page corresponding to the target data table, the first page node indicates an available memory page on which a lock fails to be acquired currently, and a remaining capacity of an idle memory page indicated by the target page node is not less than a data amount of to-be-written data; and use, as the another available memory page, the idle memory page indicated by the target page node.

In other words, in this application, after failing to acquire the write lock on the currently-found available memory page, the first thread may continue to search for the another available memory page starting from a next node of a page node corresponding to the available memory page on which the write lock fails to be acquired currently, instead of re-searching starting from a root node of the page binary tree. This can shorten search time.

Optionally, if the write lock on the currently-found available memory page fails to be acquired, the first thread may first count a cumulative quantity of available memory pages on which write locks fail to be acquired; and then perform, if the cumulative quantity of the available memory pages on which the write locks fail to be acquired is not greater than a reference threshold, a step of searching the plurality of idle memory pages for the another available memory page.

If the cumulative quantity of the available memory pages on which the write locks fail to be acquired is not greater than the reference threshold, it indicates that a quantity of times that the first thread fails to acquire the write lock is small, and the plurality of idle memory pages corresponding to the target data table may further include another available memory page that has sufficient space for the first thread to write data. In this case, the first thread may continue to search the plurality of idle memory pages for the another available memory page.

Optionally, if the write lock on the currently-found available memory page fails to be acquired, the first thread may first count the cumulative quantity of the available memory pages on which the write locks fail to be acquired; if the cumulative quantity of the available memory pages on which the write locks fail to be acquired is greater than the reference threshold, extend N idle data pages for the first thread in the target data table, where N is a preset integer greater than 0; extend an idle memory page for the target data table based on the N idle data pages; and write data into the extended idle memory page.

In this application, the first thread does not need to wait to extend the data table until it is determined that the last idle memory page is used up, but may directly trigger a data table extension procedure when a write lock on a found available memory page fails to be acquired a plurality of times and a quantity of failures exceeds a threshold. In other words, the first thread may trigger data table extension in advance when there are still a small quantity of idle memory pages in the data table. This can resolve a problem that waiting duration is long because one thread performs extension after the last idle memory page is used up and the other threads wait in a centralized manner. In addition, because each thread may directly trigger the data table extension procedure under the foregoing condition, data table extension efficiency can be improved, and a data write speed can be further increased.

Optionally, an implementation process of extending the idle memory page for the target data table based on the N idle data pages may include: allocating corresponding memory pages to the N idle data pages; and updating, based on the corresponding memory pages of the N idle data pages, the page binary tree corresponding to the target data table, so that each thread can search an updated page binary tree for the extended idle memory page to write data. The page binary tree includes a plurality of page nodes, and each page node indicates one idle memory page corresponding to the target data table.

Optionally, when extending the N idle data pages for the first thread in the target data table, the first thread may first acquire a write lock on the target data table; if the write lock on the target data table is successfully acquired, apply for N extended storage areas in a persistent storage device for the target data table; write 0 into the N extended storage areas, to obtain the N idle data pages; and then release the write lock on the target data table.

In this application, when extending a data page, the first thread first acquires a write lock on the target data table, to avoid a read/write conflict caused when another thread accesses the target data table in a table extension process. In addition, the process of extending the data table by the first thread includes two sub-procedures: extending a data page in the persistent storage device, and allocating a memory page to the extended data page and updating the page binary tree. Based on this, when extending the data page in the persistent storage device, the first thread acquires the write lock on the target data table, but does not acquire a write lock on the page binary tree corresponding to the target data table. In this way, in a process in which the first thread extends the data page, another thread that completes data page extension may update the page binary tree. In this way, different threads may execute different sub-procedures in the table extension procedure at different time, so that data table extension efficiency can be improved.

Optionally, an implementation process in which the first thread updates, based on the corresponding memory pages of the N idle data pages, the page binary tree corresponding to the target data table may include: acquiring the write lock on the page binary tree corresponding to the target data table; if the write lock on the page binary tree corresponding to the target data table is successfully acquired, adding, to the page binary tree corresponding to the target data table, page nodes corresponding to the corresponding memory pages of the N idle data pages; and releasing the write lock on the page binary tree corresponding to the target data table.

In this application, the first thread first acquires the write lock on the page binary tree before updating the page binary tree, to avoid a conflict caused when a plurality of threads simultaneously update the page binary tree of the target data table. In addition, the process of extending the data table by the first thread includes two sub-procedures: extending a data page in the persistent storage device, and allocating a memory page to the extended data page and updating the page binary tree. Based on this, when updating the page binary tree, the first thread acquires the write lock on the page binary tree, but does not acquire the write lock on the target data table. In this way, in a process in which the first thread updates the page binary tree, another thread that triggers the data table extension procedure may extend the data page. In this way, different threads may execute different sub-procedures in the table extension procedure at different time, so that data table extension efficiency is improved.

According to a third aspect, a data write apparatus is provided. The data write apparatus includes at least one module, and the at least one module is configured to perform the data write method according to the first aspect by using a first thread in a computer device. For example, the at least one module may include a first extension module, a second extension module, and a write module.

The first extension module is configured to: if no available memory page is obtained from a plurality of idle memory pages corresponding to a target data table, extend N idle data pages for the first thread in the target data table by using the first thread, where N is a preset integer greater than 0, and the first thread is any one of a plurality of threads that run in the computer device and that are to write data. The second extension module is configured to extend an idle memory page for the target data table based on the N idle data pages by using the first thread. The write module is configured to write data into the extended idle memory page by using the first thread.

Optionally, the first extension module is specifically configured to: acquire a write lock on the target data table; if the write lock on the target data table is successfully acquired, apply for N extended storage areas in a persistent storage device for the target data table; write 0 into the N extended storage areas, to obtain the N idle data pages; and release the write lock on the target data table.

Optionally, the second extension module is specifically configured to: allocate corresponding memory pages to the N idle data pages; and update, based on the corresponding memory pages of the N idle data pages, a page binary tree corresponding to the target data table, where the page binary tree corresponding to the target data table includes a plurality of page nodes, and each page node indicates one idle memory page corresponding to the target data table.

Optionally, the second extension module is specifically configured to: acquire a write lock on the page binary tree corresponding to the target data table; if the write lock on the page binary tree corresponding to the target data table is successfully acquired, add, to the page binary tree corresponding to the target data table, page nodes corresponding to the corresponding memory pages of the N idle data pages; and release the write lock on the page binary tree corresponding to the target data table.

Optionally, the apparatus further includes: a search module, configured to search, by using the first thread, the plurality of idle memory pages corresponding to the target data table for an available memory page; a counting module, configured to: if a write lock on a currently-found available memory page fails to be acquired, count, by using the first thread, a cumulative quantity of available memory pages on which write locks fail to be acquired; and a determining module, configured to: if the cumulative quantity of the available memory pages on which the write locks fail to be acquired is greater than a reference threshold, determine that the first thread fails to obtain the available memory page from the plurality of idle memory pages corresponding to the target data table.

According to a fourth aspect, a data write apparatus is provided. The data write apparatus includes at least one module, and the at least one module is configured to perform the data write method according to the second aspect by using a first thread in a computer device. For example, the at least one module may include a search module and a write module.

The search module is configured to: search, by using the first thread, a plurality of idle memory pages corresponding to a target data table for an available memory page; and search the plurality of idle memory pages for another available memory page if a write lock on a currently-found available memory page fails to be acquired, where the first thread is any one of a plurality of threads that run in the computer device and that are to write data. The write module is configured to write, by using the first thread, data into another available memory page on which a write lock is successfully acquired.

Optionally, the search module is specifically configured to: search for a target page node starting from a next page node of a first page node in a page binary tree corresponding to the target data table, where the page binary tree corresponding to the target data table includes a plurality of page nodes, each page node indicates one idle memory page corresponding to the target data table, the first page node indicates an available memory page on which a lock fails to be acquired currently, and a remaining capacity of an idle memory page indicated by the target page node is not less than a data amount of to-be-written data; and use, as the another available memory page, the idle memory page indicated by the target page node.

Optionally, the search module is specifically configured to: if the write lock on the currently-found available memory page fails to be acquired, count a cumulative quantity of available memory pages on which write locks fail to be acquired; and if the cumulative quantity of the available memory pages on which the write locks fail to be acquired is not greater than a reference threshold, search the plurality of idle memory pages for the another available memory page.

Optionally, the apparatus further includes: a first extension module, configured to: if the cumulative quantity of the available memory pages on which the write locks fail to be acquired is greater than the reference threshold, extend N idle data pages for the first thread in the target data table by using the first thread; and a second extension module, configured to: allocate corresponding memory pages to the N idle data pages by using the first thread; and update, based on the corresponding memory pages of the N idle data pages, the page binary tree corresponding to the target data table, where the page binary tree corresponding to the target data table includes the plurality of page nodes, and each page node indicates the one idle memory page corresponding to the target data table.

Optionally, the first extension module is specifically configured to: acquire a write lock on the target data table; if the write lock on the target data table is successfully acquired, apply for N extended storage areas in a persistent storage device for the target data table; write 0 into the N extended storage areas, to obtain the N idle data pages; and release the write lock on the target data table.

Optionally, the second extension module is specifically configured to: acquire a write lock on the page binary tree corresponding to the target data table; if the write lock on the page binary tree corresponding to the target data table is successfully acquired, add, to the page binary tree corresponding to the target data table, page nodes corresponding to the corresponding memory pages of the N idle data pages; and release the write lock on the page binary tree corresponding to the target data table.

According to a fifth aspect, a computer device is provided. The computer device includes a processor and a storage. The processor is configured to execute at least one program instruction or code stored in the storage, to implement the data write method according to the first aspect or the second aspect. Optionally, the storage is a memory, the computer device may further include a persistent storage device, and the persistent storage device may be a hard disk.

According to a sixth aspect, a computer-readable storage medium is provided. The computer-readable storage medium stores instructions, and when the instructions are run on a computer device, the computer device is enabled to perform the data write method according to the first aspect or the second aspect.

According to a seventh aspect, a computer program product including instructions is provided. When the computer program product runs on a computer device, the computer device is enabled to perform the data write method according to the first aspect or the second aspect.

Technical effects achieved in the third aspect to the seventh aspect are similar to the technical effects achieved by using corresponding technical means in the first aspect or the second aspect. Details are not described herein again.

In embodiments of this application, when any thread in the computer device obtains no available memory page from a plurality of idle memory pages corresponding to a target data table, the thread may extend N idle data pages for the thread, extend an idle memory page based on the N idle data pages, and write data into the extended idle memory page. It can be learned that any thread that fails to obtain an available memory page may automatically trigger a data table extension procedure to extend N data pages for the thread in time for use by the thread. In addition, because no data page needs to be extended for another thread, duration required by each thread to extend a data page is short. In comparison with a solution in which one thread centrally extends data pages for all threads that obtain no available memory page while all other threads wait, this can shorten thread blocking duration, thereby improving data write performance.

### BRIEF DESCRIPTION OF DRAWINGS

FIG. 1 is a diagram of an architecture of a storage system related to a data write method according to an embodiment of this application;
FIG. 2 is a diagram of a running architecture of a database application according to an embodiment of this application;
FIG. 3 is a diagram of an architecture of another storage system related to a data write method according to an embodiment of this application;
FIG. 4 is a flowchart of a data write method according to an embodiment of this application;
FIG. 5 is a diagram of a lock status variable corresponding to a memory page according to an embodiment of this application;
FIG. 6 is a diagram of a lock status variable corresponding to another memory page according to an embodiment of this application;
FIG. 7 is a diagram of extending a data table by a plurality of threads according to an embodiment of this application;
FIG. 8 is a flowchart of another data write method according to an embodiment of this application;
FIG. 9 is a diagram of a page binary tree according to an embodiment of this application;
FIG. 10 is a flowchart of still another data write method according to an embodiment of this application;
FIG. 11 is a diagram of comparison curves of data write performance according to an embodiment of this application;
FIG. 12 is a diagram of a structure of a data write apparatus according to an embodiment of this application; and
FIG. 13 is a diagram of a structure of another data write apparatus according to an embodiment of this application.

### DESCRIPTION OF EMBODIMENTS

To make objectives, technical solutions, and advantages of embodiments of this application clearer, the following further describes implementations of this application in detail with reference to the accompanying drawings.

Before embodiments of this application are described in detail, an application scenario in embodiments of this application is first described.

A file is usually stored in a database in a form of data table. One data table includes a plurality of data pages, and the plurality of data pages are persistently stored in a persistent storage device, for example, a disk of a computer device. Each data page may have an equal size, for example, 8 KB. In other words, each data page may include 8 KB data. In addition, each data page may correspond to one memory page in the computer device. One memory page may be understood as a storage area in a memory of the computer device. When the computer device accesses a data page, the computer device may load the data page from the persistent storage device to a corresponding memory page. For example, when the computer device is to write data into a data page in the data table, the computer device may load the data page to a corresponding memory page, and write the data into the memory page. After completing writing the data, the computer device may store the data in the memory page in the persistent storage device.

Currently, the computer device usually accesses the database by using a transaction. In addition, an idle memory page corresponding to a data page that has idle space (namely, a data page that is not fully written with data) in a data table in the database may be managed by using a page binary tree. Based on this, when a transaction thread in the computer device is to write data into a data table, the transaction thread may search, by using the page binary tree, for an available memory page that has sufficient space. After the available memory page is found, the transaction thread acquires a write lock on the available memory page. If the write lock is successfully acquired, the data is written into the available memory page. If the write lock fails to be acquired, it indicates that another transaction thread currently has already acquired the lock on the available memory page. In this case, the transaction thread waits for the another transaction thread to release the lock on the available memory page. After the another transaction thread releases the lock on the available memory page, the transaction thread determines whether the available memory page currently has sufficient space for writing data. If the available memory page currently has sufficient space for writing data, the transaction thread acquires the lock on the available memory page again, and writes the data into the available memory page after the lock is successfully acquired.

In some scenarios, a plurality of transaction threads running in the computer device may simultaneously write data into a same data table. "Simultaneously" in embodiments of this application may mean at a same moment or at a very short time interval. In this scenario, when the plurality of transaction threads search for an available memory page by using the page binary tree, there is a high probability that the plurality of transaction threads find a same available memory page. In this case, after a transaction thread in the plurality of transaction threads successfully acquires a lock on the available memory page, other transaction threads can continue to write data into the available memory page only after the transaction thread completes writing data. In other words, the plurality of transaction threads are to sequentially write data into the available memory page in a serial manner. Consequently, write efficiency is low. Moreover, during serial writing, there may be a case in which idle space of the available memory page is insufficient after the transaction thread writes the data. In this case, the other transaction threads that wait to write the data cannot write the data into the available memory page subsequently. In this case, the other transaction threads that wait to write the data need to re-search for an available memory page starting from a root node of the page binary tree. This further increases write time of these transaction threads.

Further, if the available memory page is the last available memory page that has sufficient space in the idle memory page managed by using the page binary tree, the other transaction threads that wait to write the data subsequently find that no available memory page can be found after re-searching for an available memory page starting from the root node of the page binary tree. In this case, these transaction threads simultaneously apply for extending the data table, that is, extending an idle data page in the data table. After a transaction thread successfully applies for extending the data table, all other transaction threads enter a waiting state. The transaction thread determines a quantity of extended pages based on a quantity of transaction threads that currently apply for extending the data table, extends a corresponding quantity of data pages in the data table, and allocates a corresponding memory page to each data page. In this way, the other transaction threads that apply for extending the data table can subsequently find, by using the page binary tree, an idle memory page corresponding to an extended idle data page, and write data into the idle memory page. It can be learned that, when a plurality of transaction threads simultaneously apply for extending the data table, actually, one of the transaction threads extends required data pages for the plurality of transaction threads at a time, and all the other transaction threads wait. Consequently, the data table is not extended in time. In this case, a larger quantity of transaction threads that simultaneously apply for extending the data table indicates a larger quantity of data pages that need to be extended at a time. As a result, waiting duration of the other transaction threads is longer, resulting in longer thread blocking duration.

Based on the foregoing problem, embodiments of this application provide a data write method. The data write method may be applied to a scenario in which a plurality of transaction threads concurrently write a large amount of data into a same data table, to increase a data write speed in the scenario and alleviate a problem that the data table is not extended in time, thereby improving single-table write performance.

The following describes an architecture of a system related to the data write method provided in embodiments of this application.

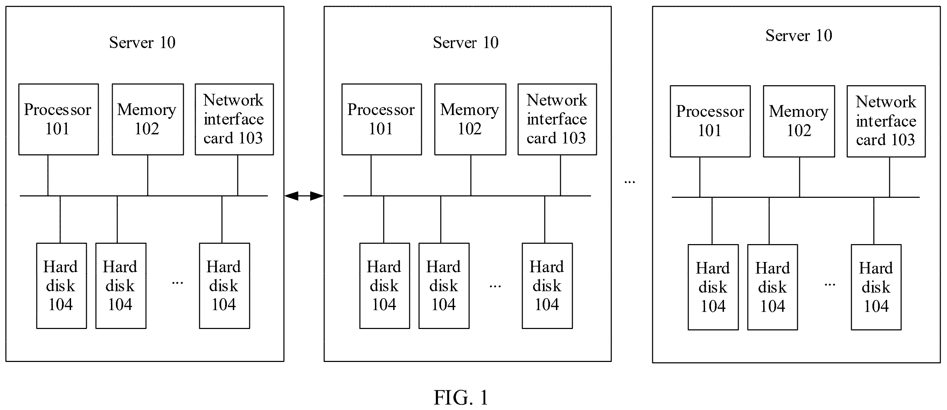

FIG. 1 is a diagram of an architecture of a storage system related to the data write method according to an embodiment of this application. As shown in FIG. 1, the storage system includes one or more servers 10 (FIG. 1 shows three servers 10, but is not limited to the three servers 10), and the servers 10 may communicate with each other. The server 10 is a device that has both a computing capability and a storage capability, for example, a server or a desktop computer. In terms of hardware, as shown in FIG. 1, the server 10 includes at least a processor 101, a memory 102, a network interface card 103, and a hard disk 104. The processor 101, the memory 102, the network interface card 103, and the hard disk 104 are connected through a bus. In terms of software, an application, for example, a database application, may be deployed in the server 10, and is used to process a read/write operation on a data page in a database. It should be noted that the application may be stored in the memory 102 of the server 10 and executed by the processor 101 to implement a corresponding function.

Specifically, the processor 101 is a central processing unit (central processing unit, CPU), is configured to process a data access request from outside the server 10 (an application server or another server 10), and is also configured to process a request generated inside the server 10. For example, when receiving a data write request, the processor 101 temporarily stores data in the data write request in the memory 102. When a total amount of data in the memory 102 reaches a specific threshold, the processor 101 sends the data stored in the memory 102 to the hard disk 104 for persistent storage. In addition, the processor 101 is further configured to perform computing or processing on data, for example, metadata management, deduplication, data compression, data check, storage space virtualization, and address translation. FIG. 1 shows only one CPU 101. In actual application, there are usually a plurality of CPUs 101, and one CPU 101 has one or more CPU cores. A quantity of CPUs and a quantity of CPU cores are not limited in embodiments of this application.

The memory 102 is an internal storage that directly exchanges data with the processor. Storage space of the memory 102 may be divided into a plurality of memory pages. Data can be read and written in the memory 102 at a high speed at any time, and the memory 102 serves as a temporary data storage of an operating system or another running program. The memory includes at least two types of storages. For example, the memory may be a random access memory, or may be a read-only memory (read-only memory, ROM). For example, the random access memory is a dynamic random access memory (dynamic random access memory, DRAM) or a storage class memory (storage class memory, SCM). The DRAM is a semiconductor memory, and is a volatile memory (volatile memory) device like most random access memories (random access memories, RAMs). The SCM uses a composite storage technology that combines features of both a conventional storage apparatus and a storage. The storage class memory can provide a higher read/write speed than a hard disk, but has a lower access speed than the DRAM, and has lower costs than the DRAM. However, the DRAM and the SCM are merely examples for description in embodiments. The memory may further include another random access memory, for example, a static random access memory (static random access memory, SRAM). The read-only memory may be, for example, a programmable read-only memory (programmable read-only memory, PROM) or an erasable programmable read-only memory (erasable programmable read-only memory, EPROM). In addition, the memory 102 may alternatively be a dual in-line memory module (dual in-line memory module, DIMM for short), namely, a module including a DRAM, or may be a solid-state disk (solid state disk, SSD). In actual application, a plurality of memories 102 and different types of memories 102 may be configured in the server 10. A quantity and types of the memories 102 are not limited in embodiments. In addition, the memory 102 may be configured to have a power protection function. The power protection function means that data stored in the memory 102 is not lost when a system is powered off and then powered on again. A memory having the power protection function is referred to as a nonvolatile memory.

The hard disk 104 is configured to provide a storage resource, for example, store data in the database in a form of data page. Each data page may be mapped to a memory page in the memory 102. The hard disk 104 may be a magnetic disk or another type of storage medium, for example, a solid-state disk or a shingled magnetic recording hard disk. The network interface card 103 is configured to communicate with another application server 10.

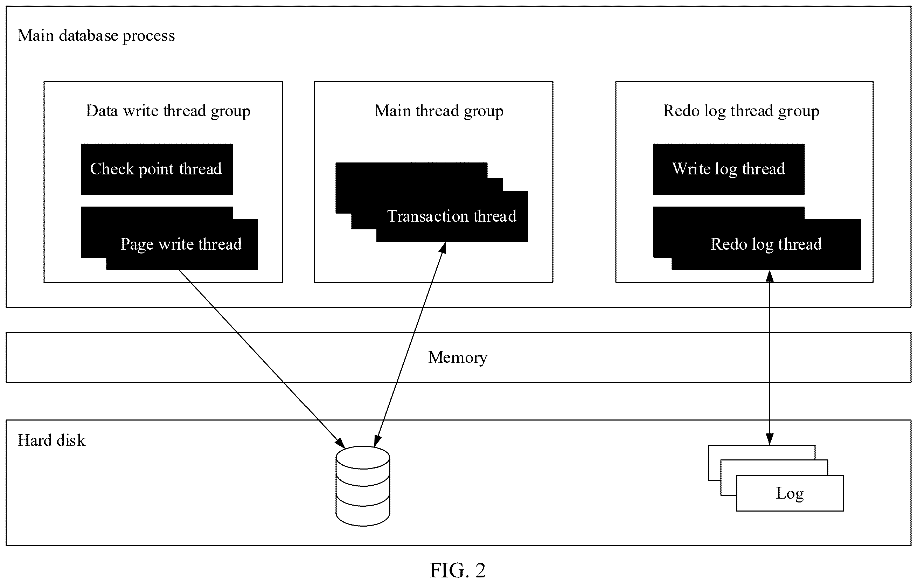

For example, FIG. 2 is a diagram of running a database application on a server 10 according to an embodiment of this application. As shown in FIG. 2, a main database process may run in a processor. The main database process includes a main thread group, a data write thread group, and a redo log (redo log) thread group. When a database update request or a data insertion request is received, a transaction thread in the main thread group may load a data page stored in a hard disk to a memory page in a memory, and then write to-be-written data into the memory page. The redo log thread group includes a write log (write log) thread and a redo log thread. A transaction log that records change information of data in a memory page may be generated by using the write log thread, and the redo log thread may restore the database by reading the persistently-stored transaction log. The data write thread group includes a check point (check point) thread and a page write (page write) thread. The check point thread may trigger the page write thread to write the data in the memory page into the hard disk for persistent storage.

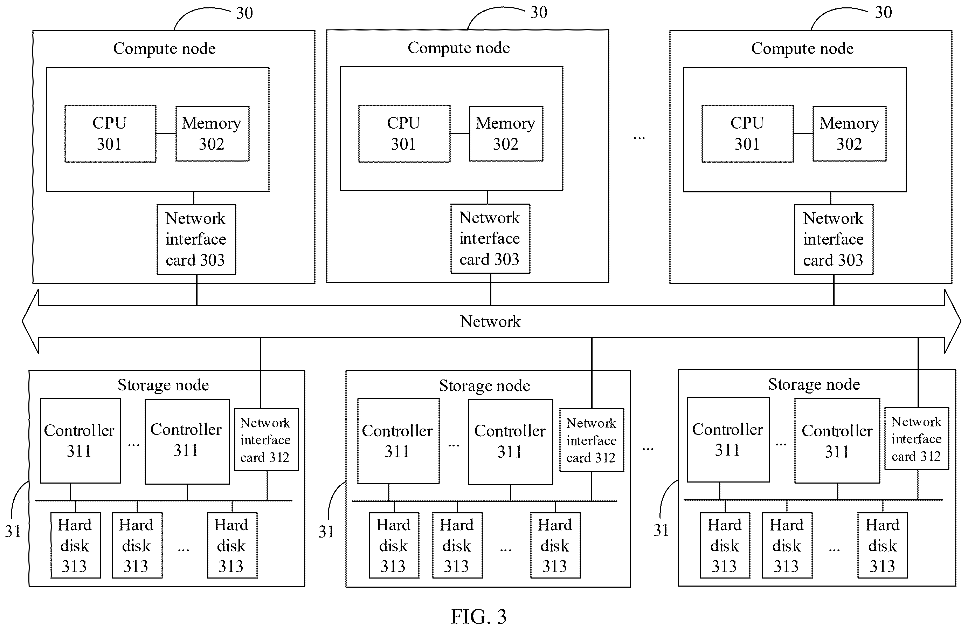

The foregoing is an example of a system architecture of a storage system to which the data write method in embodiments of this application is applied. In addition, the data write method may also be applied to another type of storage system, for example, a storage system in which storage and computing are separated. Storage and computing separation means that computing and storage functions are separated and deployed on different devices. A device that is mainly used to implement a computing function is referred to as a compute node, and a device that mainly provides a data storage function is referred to as a storage node. For example, FIG. 3 is a diagram of an architecture of a storage system in which storage and computing are separated. The data write method provided in embodiments of this application may also be applied to the storage system. As shown in FIG. 3, the storage system may include a plurality of compute nodes 30 and a plurality of storage nodes 31. The compute nodes 30 may communicate with each other through a network, and each compute node 30 may access any storage node 31 through the network.

The compute node 30 is a computing device, for example, a server or a desktop computer. In terms of hardware, as shown in FIG. 3, the compute node 30 includes at least a processor 301, a memory 302, and a network interface card 303. In terms of software, an application may be deployed in the compute node 30. For example, a client of a database application may be deployed in the compute node 30, and is configured to process a read/write operation on a data page in a database. It should be noted that the application may be stored in the memory 302 of the compute node 30 and executed by the processor 301 to implement a corresponding function.

Specifically, the processor 301 is a central processing unit (central processing unit, CPU), and is configured to process a data access request from outside the compute node 30 or a request generated inside the compute node 30. For example, when receiving a data write request sent by a user, the processor 301 temporarily stores data in the data write request in the memory 302. When a total amount of data in the memory 302 reaches a specific threshold, the processor 301 sends the data stored in the memory 302 to the storage node 31 for persistent storage. For example, the processor 301 runs the database application. The processor 301 may run a main thread, a data write thread, and a log recording thread. When a database update request or a data insertion request is received, the main thread may load a data page stored in the storage node 31 to a memory page in the memory 302, and then write to-be-written data into the memory page. The log recording thread may record change information of data in the memory page. After a total amount of data in the memory page reaches a specific threshold, the data write thread may send the data in the memory page to the storage node 31 for persistent storage.

In addition, the processor 301 is further configured to perform computing or processing on data, for example, metadata management, deduplication, data compression, storage space virtualization, and address translation. FIG. 3 shows only one CPU 301. In actual application, there are usually a plurality of CPUs 301, and one CPU 301 has one or more CPU cores. A quantity of CPUs and a quantity of CPU cores are not limited in embodiments.

The memory 302 is an internal storage that directly exchanges data with the processor 301. Storage space of the memory 302 may be divided into a plurality of memory pages. Data can be read and written in the memory 302 at a high speed at any time, and the memory 302 serves as a temporary data storage of an operating system or another running program. For a detailed implementation of the memory 302, refer to the related description of the memory in the server shown in FIG. 1. Details are not described herein again in this embodiment of this application.

The network interface card 303 is configured to communicate with the storage node 31. For example, when a total amount of data in the memory 302 reaches a specific threshold, the compute node 30 may send a request to the storage node 31 through the network interface card 303, to perform persistent storage on the data. In addition, the compute node 30 may further include a bus, used for communication between components inside the compute node 30. In terms of functions, a main function of the compute node 30 in FIG. 3 is a computing service, and a remote storage may be used to implement persistent storage during data storage. Therefore, the compute node 30 has fewer local storages than a conventional server. This reduces costs and space. However, this does not mean that the compute node 30 cannot have a local storage. During actual implementation, the compute node 30 may alternatively have a small quantity of built-in hard disks or a small quantity of externally-connected hard disks.

Any compute node 30 may access any storage node 31 through the network. The storage system in this embodiment of this application includes a plurality of storage nodes 31 (FIG. 3 shows three storage nodes 31, but is not limited to the three storage nodes 31). The storage node 31 may include one or more controllers 311, a network interface card 312, and a plurality of hard disks 313. The network interface card 312 is configured to communicate with the compute node 30. The hard disk 313 is configured to store data, for example, store data in the database in a form of data page. Each data page may be mapped to a memory page in the memory 102. The hard disk 313 may be a magnetic disk or another type of storage medium, for example, a solid-state disk or a shingled magnetic recording hard disk. The controller 311 is configured to write data into the hard disk 313 or read data from the hard disk 313 based on a data read/write request sent by the compute node 30. During data read/write, the controller 311 needs to convert an address carried in the data read/write request into an address that can be identified by the hard disk. It can be learned that the controller 311 also has some simple computing functions.

In actual application, the controller 311 may have a plurality of forms. In an implementation, the controller 311 includes a CPU and a memory. The CPU is configured to perform operations such as address translation and data read/write. The memory is configured to temporarily store data that is to be written into the hard disk 313, or read, from the hard disk 313, data that is to be sent to the compute node 30.

In another implementation, a function of the controller 311 may be offloaded to the network interface card 312. In other words, the storage node 31 does not have the controller 311, and the network interface card 312 completes data read/write, address translation, and other computing functions. In this case, the network interface card 312 is an intelligent network interface card, and may contain a CPU and a memory. The CPU is configured to perform operations such as address translation and data read/write. The memory is configured to temporarily store data that is to be written into the hard disk 313, or read, from the hard disk 313, data that is to be sent to the compute node 30.

In addition, in this embodiment of this application, in terms of software, a storage program may be deployed in the storage node 31. For example, a server of a database application may be deployed, to provide functions such as data page access and access permission management in the database. It should be noted that the storage program may be stored in a memory of the controller 311, and a CPU of the controller 311 may execute the storage program to implement a function of the server of the database application. Alternatively, the storage program may be stored in a memory of the network interface card 312, and a CPU in the network interface card 312 may execute the storage program to implement the function of the server of the database application. It should be noted that, when the database application runs in the storage system shown in FIG. 3, for a running architecture diagram of the database application, refer to the running architecture diagram shown in FIG. 2. In this case, the memory in FIG. 2 may be the memory 302 in the compute node 30, and the hard disk may be the hard disk 313 in the storage node 31.

In the following, the data write method provided in embodiments of this application is described in detail.

The data write method provided in embodiments of this application may be performed by a computer device. For example, when the data write method is applied to the storage system shown in FIG. 1, the computer device may be any server in the storage system. When the data write method is applied to the storage system shown in FIG. 3, the computer device may be a compute node in the storage system. A plurality of threads that are to write data may run on the computer device, and the method may be performed by any one of the plurality of threads. For example, a database application may be deployed in the computer device, a running architecture of the database application may be shown in FIG. 2, and the plurality of threads may be a plurality of transaction threads included in a main thread group in a main database process. For ease of description, in the following embodiments, a first thread in the plurality of threads is used as an execution body for description.

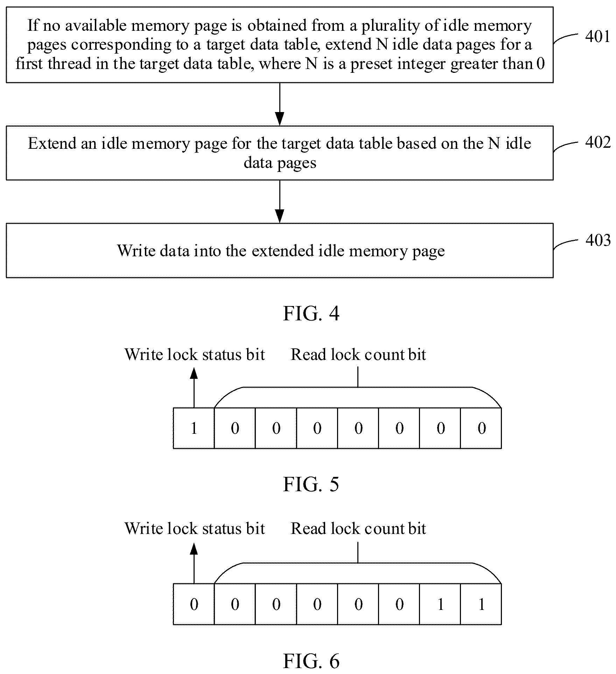

FIG. 4 is a flowchart of a data write method according to an embodiment of this application. Refer to FIG. 4, the method includes the following steps.

Step 401: If no available memory page is obtained from a plurality of idle memory pages corresponding to a target data table, extend N idle data pages for a first thread in the target data table, where N is a preset integer greater than 0.

In this embodiment of this application, data in a database may be stored in a persistent storage device in a form of data table. The persistent storage device may be a hard disk included in a computer device, or may be a hard disk in another device other than the computer device.

In addition, the data table may include a plurality of data pages, and a size of each data page indicates an amount of data included in the corresponding data page. Each data page may have an equal size, for example, 8 KB. In addition, each data page corresponds to one memory page. A memory page corresponding to an idle data page that has idle space in the data table also has idle space, and therefore may be referred to as an idle memory page.

When the first thread in the computer device is to write data into the target data table, the first thread may first obtain an available memory page from the plurality of idle memory pages corresponding to the target data table. If an available memory page is obtained, the first thread may write data into the available memory page. If no available memory page is obtained, the first thread may trigger a data table extension procedure, and extend N idle data pages for the first thread in the target data table. The target data table is any data table stored in the database.

In a possible implementation, the first thread may search the idle memory pages corresponding to the target data table for an available memory page; if a write lock on a currently-found available memory page fails to be acquired, count a cumulative quantity of available memory pages on which write locks fail to be acquired; and if the cumulative quantity of the available memory pages on which the write locks fail to be acquired is greater than a reference threshold, determine that no available memory page is obtained from the plurality of idle memory pages corresponding to the target data table.

An idle memory page corresponding to an idle data page of a data table may be managed by using a page binary tree. The page binary tree may include a plurality of page nodes, and each page node indicates one idle memory page. For example, each page node may record a page identifier and a remaining capacity of one idle memory page. Based on this, the first thread may search, by using the page binary tree corresponding to the target data table, for an available memory page in the plurality of idle memory pages corresponding to a plurality of idle data pages in the target data table.

For example, the first thread may sequentially search, starting from a root node of the page binary tree or a next page node of a first page node corresponding to an available memory page on which a write lock fails to be acquired last time, for a page node whose recorded remaining capacity is not less than a data amount of to-be-written data, and use, as the currently-found available memory page, an idle memory page indicated by the first found page node that satisfies the foregoing condition.

Optionally, the idle memory page corresponding to the idle data page in the data table may alternatively be managed in another manner. For example, the computer device may store page information of the idle memory pages in a specific sequence. The page information includes the page identifier and the remaining capacity of the memory page. On this basis, the first thread may sequentially search, based on the storage sequence and starting from the first piece of page information or page information of the available memory page on which the write lock fails to be acquired last time, for page information that includes a remaining capacity not less than the data amount of the to-be-written data, and use, as the currently-found available memory page, an idle memory page identified by a page identifier in the first piece of found page information that satisfies the foregoing condition.

After the available memory page is found, the first thread may acquire a write lock on the currently-found available memory page.

It should be noted that each memory page may correspond to one lock status variable. The lock status variable may include a write lock status bit and a read lock count bit. When a value of the write lock status bit is a first value, it indicates that a thread currently holds a write lock on a memory page corresponding to the lock status variable. The write lock may also be referred to as an exclusive lock. When a thread holds the write lock on the memory page, it indicates that the thread is writing data into the memory page. In this case, to avoid a read/write conflict, another thread cannot acquire the write lock on the memory page, and cannot acquire a read lock on the memory page. In other words, the another thread cannot hold the write lock and the read lock on the memory page. When the value of the write lock status bit is a second value, it indicates that no thread currently holds the write lock on the memory page. The first value may be 1, and the second value may be 0. Alternatively, the first value is 0, and the second value may be 1.

In addition, when a count value indicated by the read lock count bit of the lock status variable is 0, it indicates that no read lock on the memory page corresponding to the lock status variable is currently acquired. When the count value indicated by the read lock count bit is not 0, it indicates that a read lock on the memory page corresponding to the lock status variable is currently acquired. In this case, a quantity of threads that hold the read lock on the memory page is equal to the count value. When one or more threads hold the read lock on the memory page, to avoid a read/write conflict, another thread cannot acquire a write lock on the memory page.

For example, refer to FIG. 5 and FIG. 6. The lock status variable may be an 8-bit variable, where the most significant bit is a write lock status bit, and remaining bits are read lock count bits. As shown in FIG. 5, when the write lock status bit is 1, it indicates that a thread currently holds the write lock on the memory page corresponding to the lock status variable. In this case, the count value of the read lock count bit is 0. In other words, no thread holds the read lock on the memory page corresponding to the lock status variable. In this case, another thread cannot acquire the write lock or the read lock on the memory page. As shown in FIG. 6, the write lock status bit is 0, and it indicates that no thread currently holds the write lock on the memory page corresponding to the lock status variable. The count value of the read lock count bit is 3, and it indicates that three threads currently hold the read lock on the memory page corresponding to the lock status variable. In this case, another thread may continue to acquire the read lock on the memory page, but cannot acquire the write lock on the memory page.

Based on the foregoing description, in this embodiment of this application, the first thread may determine whether a write lock status bit in a lock status variable corresponding to the currently-found available memory page is the second value, and whether a count value indicated by a read lock count bit is 0.

If the write lock status bit in the lock status variable corresponding to the currently-found available memory page is the second value, and the count value indicated by the read lock count bit is 0, it indicates that currently, no thread holds a write lock on the available memory page, and no thread holds a read lock on the available memory page. In this case, the first thread may set the write lock status bit in the lock status variable corresponding to the available memory page to the first value, to acquire the write lock on the available memory page. After the first thread successfully sets the write lock status bit to the first value, it indicates that the first thread successfully acquires the write lock on the available memory page. In this case, it may be considered that the first thread obtains the available memory page. In this case, the first thread may write data into the available memory page.

If the write lock status bit in the lock status variable corresponding to the currently-found available memory page is not the second value, or the count value indicated by the read lock count bit is not equal to 0, it indicates that another thread currently holds the write lock or the read lock on the available memory page. In this case, the first thread cannot acquire the write lock on the available memory page. Therefore, the first thread may determine that the write lock on the available memory page fails to be acquired.

After the write lock on the currently-found available memory page fails to be acquired, the first thread may count the cumulative quantity of the available memory pages on which the write locks fail to be acquired. If the cumulative quantity of the available memory pages on which the write locks fail to be acquired is greater than the reference threshold, it indicates that the quantity of the available memory pages on which the write locks fail to be acquired by the first thread is large, and there may be a small quantity of available memory pages that are in the plurality of idle memory pages corresponding to the target data table and that have sufficient space for the first thread to write data, in other words, there are a small quantity of idle data pages that are in the target data table and that are available for the first thread to write data. In this case, the first thread may determine that no available memory page is obtained, and trigger the data table extension procedure. In other words, the first thread may extend the N idle data pages for the first thread in the target data table. The reference threshold may be a preset threshold, and the reference threshold may be set based on a value of N. For example, the reference threshold may be a positive integer not less than N.

Optionally, if the cumulative quantity of the available memory pages on which the write locks fail to be acquired is not greater than the reference threshold, the first thread may continue to search for another available memory page by using the method described above.

In another possible implementation, the first thread may search the idle memory page corresponding to the target data table for an available memory page; and wait if a write lock on a currently-found available memory page fails to be acquired. When the write lock on the currently-found available memory page is released and the first thread successfully re-acquires the write lock on the available memory page, the first thread may determine whether a remaining capacity of the available memory page is less than a data amount of to-be-written data. If the available memory page is less than the data amount of the to-be-written data, and the available memory page is the last available memory page of the first thread in the target data table, the first thread may determine that no available memory page is obtained from the plurality of idle memory pages corresponding to the target data table. In this case, the first thread may trigger the data table extension procedure to extend the N idle data pages for the first thread. In other words, when determining that the remaining capacity of the last available memory page after another thread writes data is insufficient for the first thread to write data, the first thread may trigger the data table extension procedure. Alternatively, after failing to acquire the write lock on the currently-found available memory page, the first thread may not wait, but directly search remaining unsearched idle memory pages for another available memory page. If no other available memory page is found, it indicates that the available memory page found last time is the last available memory page. In this case, the first thread may trigger the data table extension procedure.

When extending the target data table, the first thread may acquire a write lock on the target data table; if the write lock on the target data table is successfully acquired, apply for N extended storage areas for the target data table in the persistent storage device; write 0 into the N extended storage areas to obtain the N idle data pages; and then release the write lock on the target data table.

Each data table in the database may correspond to one lock status variable. The first thread may acquire, by referring to the foregoing manner of acquiring a lock on the memory page, a write lock on the target data table by setting a write lock status bit of a lock status variable corresponding to the target data table. If the write lock on the target data table is successfully acquired, another thread cannot load a data page in the target data table from the hard disk to the memory page for read and write, and cannot persistently store the data page in the memory page corresponding to the target data table in the hard disk. In this way, a read/write conflict caused when another thread accesses the target data table in a process of extending the data table can be avoided.

If the write lock on the target data table is successfully acquired, the first thread may apply for the N extended storage areas for the data table from an idle storage area of the persistent storage device based on a size of a data page in the target data table. A size of each extended storage area is equal to the size of the data page.

It should be noted that N is a preset quantity of data pages that need to be extended for each thread, that is, N is a quantity of data pages that need to be extended for one thread. In other words, any thread that fails to obtain an available memory page and that triggers the data table extension procedure in the plurality of threads running on the computer device may extend N data pages, and N does not increase as a quantity of threads that need to extend the data table increases. N may be set based on a maximum amount of data that can be written into the persistent storage device by the computer device within reference duration. For example, the reference duration may be operation duration required by the computer device to write a data page into the persistent storage device.

Because the extended storage area may store random data, after applying for the N extended storage areas, the computer device may write 0 into each extended storage area, that is, clear data in each extended storage area. In this case, each extended storage area stores one idle data page, and data in the idle data page is 0, that is, the idle data page is an empty data page. The N idle data pages stored in the N extended storage areas are data pages extended by the first thread for the first thread.

For example, it is assumed that the size of the data page in the target data table is 8 KB, and operation duration required by the computer device to write a data page of 8 KB into the persistent storage device is equal to operation duration required by the computer device to write 128 KB data into the persistent storage device. Therefore, N may be set to 16. On this basis, the first thread may apply for 16 extended storage areas of 8 KB from the idle storage area of the persistent storage device, and then write 0 into the 16 extended storage areas, to obtain 16 idle data pages. Because the operation duration required by the computer device to write the data page of 8 KB is equal to the operation duration required by the computer device to write the 128 KB data, duration required by the first thread to perform an operation of centrally writing 0 into the 16 extended storage areas of 8 KB is equal to duration required to perform an operation of writing data into one storage area of 8 KB. It can be learned that, when N is set according to the method described above, the thread applies for a corresponding quantity of extended storage areas at a time, and then writes data into the applied extended storage areas in a centralized manner to obtain a plurality of idle data pages. This can reduce a quantity of input/output (input output) I/O times and reduce an I/O latency.

Optionally, in a possible case, the first thread may alternatively write 0 into an extended storage area each time when the first thread applies for the extended storage area, to obtain an idle data page.

After extending the N idle data pages for the first thread, the first thread may release the write lock on the target data table by modifying the write lock status bit of the lock status variable corresponding to the target data table, so that another thread can access the data table subsequently.

Step 402: Extend an idle memory page for the target data table based on the N idle data pages.

After extending the N idle data pages for the first thread, the first thread may allocate corresponding memory pages to the N idle data pages; and then update, based on the corresponding memory pages of the N idle data pages, a page binary tree corresponding to the target data table, where the page binary tree corresponding to the target data table includes a plurality of page nodes, and each page node indicates one idle memory page corresponding to the target data table.

The first thread may allocate the corresponding memory pages to the N data pages from an idle storage area of a memory, so that the idle data pages can be loaded to the corresponding idle memory pages for operation when the idle data pages are accessed subsequently.

Because the corresponding memory pages allocated to the N idle data pages are idle memory pages, when the idle memory pages of the target data table are managed by using the page binary tree, after allocating the corresponding memory pages to the N idle data pages, the first thread may further update information about the idle memory pages to the page binary tree, so that another thread can subsequently find these idle memory pages by using the page binary tree.

For example, the first thread may first acquire a write lock on the page binary tree corresponding to the target data table; if the write lock on the page binary tree is successfully acquired, add, to the page binary tree, page nodes corresponding to the corresponding memory pages of the N idle data pages; and then release the write lock on the page binary tree.

The first thread may acquire, by referring to the foregoing manner of acquiring the write lock on the available memory page, the write lock on the page binary tree corresponding to the target data table. In this way, a conflict caused when a plurality of threads simultaneously update the page binary tree of the target data table can be avoided.

If the first thread successfully acquires the write lock on the page binary tree, the first thread may add, according to a generation rule of the page binary tree and based on page information of the memory page corresponding to each extended idle data page, a corresponding page node to the page binary tree. For example, the first thread may add, starting from a leaf node at a bottom layer of the page binary tree, a page node indicating a memory page corresponding to an idle data page. Each page node may record page information, for example, a page identifier and a remaining capacity, of an indicated memory page. In this case, the memory page corresponding to the idle data page is an added idle memory page into which no data has been written. Therefore, a remaining capacity recorded in an added page node indicating the memory page corresponding to the idle data page may be equal to a capacity of the memory page.

After updating the page binary tree of the target data table, the first thread may release the write lock on the page binary tree.

Optionally, when page information of the idle memory pages corresponding to the target data table is managed in another manner, after allocating the corresponding memory pages to the extended N idle data pages, the first thread may also update, based on page information of the corresponding memory pages of the N idle data pages, the managed page information of the plurality of idle memory pages corresponding to the target data table. Details are not described herein again in this embodiment of this application.

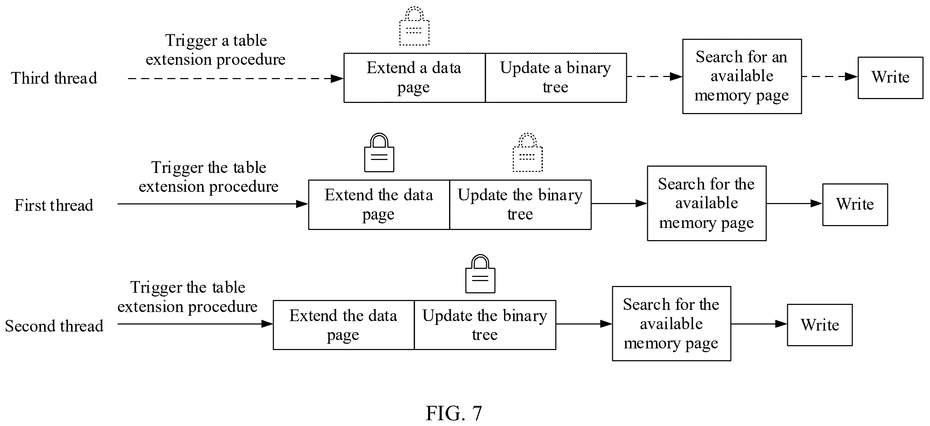

In conclusion, in this embodiment of this application, when extending the data table, the first thread first acquires a lock on the target data table, to extend the data page in the persistent storage device; after extending the data page, releases the write lock on the target data table; and then acquires a write lock on the page binary tree, to update the page binary tree. In other words, in this embodiment of this application, two write locks are used to control two sub-procedures of page extension and binary tree update in the data table extension procedure. In this way, as shown in FIG. 7, when the first thread extends the data page, another thread (for example, the second thread shown in FIG. 7) that has previously completed data page extension is not affected in updating the page binary tree. When the first thread updates the page binary tree after extending the data page, subsequent data page extension of another thread (for example, the third thread shown in FIG. 7) is not affected. In other words, the first thread and the another thread may concurrently perform different sub-procedures in the data table extension procedure. In this way, data table extension efficiency can be improved.

Optionally, in some possible implementations, it can be learned from the foregoing descriptions that the first thread may write 0 into an extended storage area each time when the first thread applies for the extended area, to obtain an idle data page. Based on this, the first thread may also allocate a corresponding memory page to an idle data page each time when the first thread obtains the idle data page through extension, and update the page binary tree based on the memory page corresponding to the idle data page. Then, the first thread extends a next idle data page.

Step 403: Write data into the extended idle memory page.

After extending the target data table, the first thread may write data into the corresponding memory pages of the N idle data pages extended by the first thread.

The first thread may randomly determine one idle memory page from the corresponding memory pages of the N idle data pages, and the idle memory page is an available memory page. Then, the first thread may acquire a write lock on the available memory page by referring to the foregoing method, and write the data into the available memory page after successfully acquiring the write lock.

Optionally, the first thread may continue to search for an available memory page starting from a next page node of a page node corresponding to a memory page that is in the page binary tree corresponding to the target data table and on which a write lock fails to be acquired last time, or may search for an available memory page starting from the root node of the page binary tree. Because the page nodes indicating the memory pages corresponding to the extended N idle data pages have been added to the page binary tree, the first thread finds an extended idle memory page as an available memory page, then acquires a write lock on the available memory page by using the foregoing method, and writes data into the available memory page after successfully acquiring the write lock.

In this embodiment of this application, when any thread in the computer device obtains no available memory page from the plurality of idle memory pages corresponding to the target data table, the thread may extend N idle data pages for the thread, extend an idle memory page based on the N idle data pages, and write data into the extended idle memory page. It can be learned that any thread that fails to obtain an available memory page may automatically trigger the data table extension procedure to extend the N data pages for the thread in time for use by the thread. In addition, because no data page needs to be extended for another thread, duration required by each thread to extend a data page is short. In comparison with a solution in which one thread centrally extends data pages for all threads that obtain no available memory page while all other threads wait, this can shorten thread blocking duration.

In addition, in this embodiment of this application, the first thread does not need to wait to extend the data table until the last idle memory page is used up, but may directly trigger the data table extension procedure when a write lock on a found available memory page fails to be acquired a plurality of times and a quantity of failures exceeds a threshold. In other words, in this embodiment of this application, data table extension may be triggered in advance when the data table still has a small quantity of idle memory pages. On this basis, data table extension is performed by different threads at different time, instead of being performed by one thread, where the other threads wait in a centralized manner. In this way, data table extension efficiency can be improved, thread waiting duration can be shortened, and a data write speed can be increased.

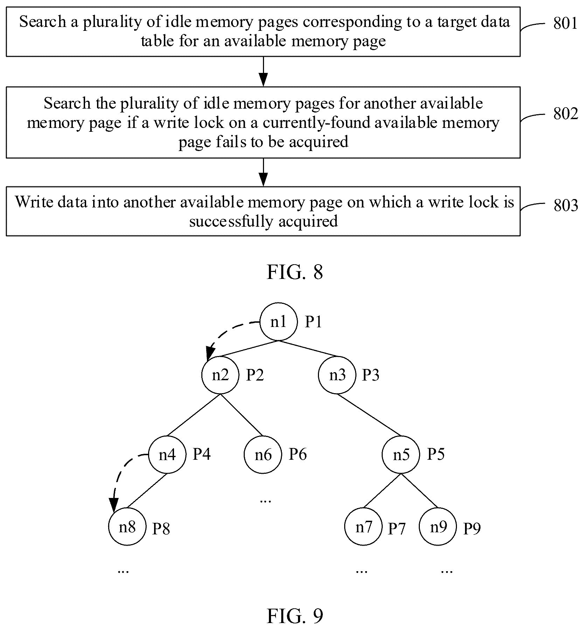

FIG. 8 is a flowchart of another data write method according to an embodiment of this application. Refer to FIG. 8. The method includes the following steps.

Step 801: Search a plurality of idle memory pages corresponding to a target data table for an available memory page.

In this embodiment of this application, data in a database may be stored in a persistent storage device in a form of data table. The persistent storage device may be a hard disk included in a computer device, or may be a hard disk in another device other than the computer device.

In addition, the data table may include a plurality of data pages, and a size of each data page indicates an amount of data included in the corresponding data page. Each data page may have an equal size, for example, 8 KB. In addition, each data page corresponds to one memory page. A memory page corresponding to an idle data page that has idle space in the data table also has idle space, and therefore may be referred to as an idle memory page.

In this embodiment of this application, an idle memory page corresponding to an idle data page in a data table may be managed by using a page binary tree. The page binary tree may include a plurality of page nodes, and each page node indicates one idle memory page. For example, each page node may record a page identifier and a remaining capacity of one idle memory page.

Based on this, when a first thread in the computer device needs to write data into the target data table, the first thread may first search, by using the page binary tree corresponding to the target data table, for an available memory page in the plurality of idle memory pages corresponding to a plurality of idle data pages in the target data table.

For example, the first thread may sequentially search, based on a data amount of to-be-written data and starting from a root node of the page binary tree, for a page node whose recorded remaining capacity is not less than the data amount of the to-be-written data, and use, as a currently-found available memory page, an idle memory page indicated by the first found page node that satisfies the foregoing condition.

Optionally, the idle memory page corresponding to the idle data page in the data table may alternatively be managed in another manner. For example, the computer device may store page information of the idle memory pages in a specific sequence. The page information includes the page identifier and the remaining capacity of the memory page. On this basis, the first thread may sequentially search, based on the storage sequence and starting from the first piece of page information, for page information that includes a remaining capacity not less than the data amount of the to-be-written data, and use, as the currently-found available memory page, an idle memory page identified by a page identifier in the first piece of found page information that satisfies the foregoing condition.

Step 802: Search the plurality of idle memory pages for another available memory page if a write lock on the currently-found available memory page fails to be acquired.

After the available memory page is found, the first thread may acquire a write lock on the currently-found available memory page. For an implementation in which the first thread acquires the write lock on the currently-found available memory page, refer to the related implementation described in step 401. Details are not described herein again in this embodiment of this application.

If the first thread successfully acquires the write lock on the currently-found available memory page, the first thread may write data into the available memory page.

If the first thread fails to acquire the write lock on the currently-found available memory page, the first thread may re-search the plurality of idle memory pages corresponding to the plurality of idle data pages in the target data table for another available memory page.

For example, the idle memory page is managed by using the page binary tree. The first thread may search for a target page node starting from a next page node of a first page node in the page binary tree corresponding to the target data table, where the first page node indicates an available memory page on which a lock fails to be acquired currently, and a remaining capacity of an idle memory page indicated by the target page node is not less than the data amount of the to-be-written data; and use, as the another available memory page, an idle memory page indicated by the target page node.

In other words, the first thread may not re-search from the root node of the page binary tree, but search, one by one starting from a next page node of a first page node corresponding to the available memory page on which the write lock fails to be acquired currently, for the page node whose recorded remaining capacity is not less than the data amount of the to-be-written data, use, as the target page node, the first found page node that satisfies the foregoing condition, and use, as an available memory page found through re-searching, the idle memory page indicated by the target page node. In this case, the available memory page found through re-searching is different from the available memory page found last time.

After another available memory page is found through re-searching, the first thread may acquire a write lock on the available memory page by referring to the foregoing method. If the write lock fails to be acquired, the first thread may re-search the plurality of idle memory pages for another available memory page again until the write lock on the found available memory page is successfully acquired. Then, the first thread performs the following step 803.

For example, FIG. 9 is a diagram of searching for an available memory page by using the page binary tree corresponding to the target data table. As shown by a dashed arrow in FIG. 9, it is assumed that the first thread finds, starting from the root node of the page binary tree, a page node n2 indicating an available memory page P2. After failing to acquire a write lock on the available memory page P2, the first thread may re-search for another available memory page starting from a next node n4 of n2. It is assumed that the first thread finds, through re-searching, a page node n8 indicating an available memory page P8, and still fails to acquire a write lock on the available memory page P8. In this case, the first thread may continue to search for another available memory page starting from a next node of n8. This process continues until a write lock on a found available memory page is successfully acquired.

Optionally, after failing to acquire the write lock on the currently-found available memory page, the first thread may further count a cumulative quantity of available memory pages on which write locks fail to be acquired; and then perform, if the cumulative quantity of the available memory pages on which the write locks fail to be acquired is not greater than a reference threshold, a step of searching the plurality of idle memory pages for the another available memory page. If the cumulative quantity of the available memory pages on which the write locks fail to be acquired is greater than the reference threshold, the first thread extends N idle data pages for the first thread in the target data table; then extends an idle memory page for the target data table based on the N idle data pages; and further writes data into the extended idle memory page. N is a preset integer greater than 0.

It can be learned from the foregoing description that, each time the first thread finds an available memory page, the first thread may acquire a write lock on the available memory page. If the write lock fails to be acquired, the first thread may count the cumulative quantity of the available memory pages on which the write locks fail to be acquired. The cumulative quantity is a total quantity of times that the first thread fails to acquire the write lock. If the cumulative quantity is not greater than the reference threshold, it indicates that a quantity of available memory pages on which the write locks fail to be acquired by the first thread is small, and the plurality of idle memory pages corresponding to the target data table may further include another available memory page that has sufficient space for the first thread to write data. In this case, the first thread may continue to search the plurality of idle memory pages for the another available memory page.

If the cumulative quantity is greater than the reference threshold, it indicates that the quantity of the available memory pages on which the write locks fail to be acquired by the first thread is large, and there may be a small quantity of available memory pages that are in the plurality of idle memory pages corresponding to the target data table and that have sufficient space for the first thread to write data, in other words, there are a small quantity of idle data pages that are in the target data table and that are available for the first thread to write data. In this case, the first thread may extend the target data table to increase idle data pages.

For an implementation process in which the first thread extends the N idle data pages for the first thread in the target data table when extending the target data table, refer to the related descriptions in step 401. Then, for an implementation process in which the first thread extends the idle memory pages for the target data table based on the N idle data pages, refer to the related descriptions in step 402 in the foregoing embodiment. Details are not described again in this embodiment of this application.

After extending the target data table, the first thread may write data into the extended idle memory page.

The first thread may directly randomly obtain an idle memory page from the idle memory pages corresponding to the extended N idle data pages, use the idle memory page as an available memory page, acquire a write lock on the available memory page, and perform step 403 after successfully acquiring the write lock.

Optionally, the first thread may continue to search for an available memory page starting from a next page node of a page node corresponding to a memory page on which a write lock fails to be acquired last time, or may search for an available memory page starting from the root node of the page binary tree. Because the page node indicating the memory page corresponding to the extended data page has been added to the page binary tree, the first thread finds the memory page corresponding to the extended data page as an available memory page, then acquires a write lock on the available memory page by using the foregoing method, and performs step 403 after successfully acquiring the write lock.

Optionally, in some possible cases, after failing to acquire the write lock on the currently-found available memory page, the first thread may perform different operations based on different causes of the write lock acquiring failure.

For example, if the first thread fails to acquire the write lock because a read lock on the currently-found available memory page has been acquired, the first thread may determine, based on a quantity of threads that currently hold the read lock on the available memory page, whether to wait or continue to search for another available memory page. For example, if the quantity of threads that hold the read lock on the available memory page is not greater than a first threshold, the first thread may wait until all the threads that hold the read lock on the available memory page release the read lock, and then acquire the write lock on the available memory page to write data. If the quantity of threads that hold the read lock on the available memory page is greater than the first threshold, the first thread may continue to search for another available memory page by referring to the foregoing method.

If the first thread fails to acquire the write lock because the write lock on the currently-found available memory page has been acquired, the first thread may determine whether there is another thread that is waiting in a queue to acquire the write lock on the available memory page, and count a quantity of waiting threads if there is a waiting thread. If the quantity of waiting threads is not greater than a second threshold, the first thread may queue up to wait for another thread to write data and release the write lock, and then acquire the write lock on the available memory page to write data. If the quantity of waiting threads is greater than the second threshold, the first thread may continue to search for another available memory page by referring to the foregoing method.

803: Write data into another available memory page on which a write lock is successfully acquired.

After the first thread successfully acquires the write lock on the found another available memory page, the first thread may write data into the available memory page.

In this embodiment of this application, when the first thread in the computer device writes data into the target data table, the first thread may search the plurality of idle memory pages corresponding to the target data table for the available memory page. If the write lock on the currently-found available memory page fails to be acquired, it indicates that another thread is accessing the available memory page. In this case, the first thread does not wait for the another thread to release the lock on the available memory page, but directly searches the plurality of idle memory pages for the another available memory page, and writes the data into the another available memory page on which the write lock is successfully acquired. This can shorten waiting time of the first thread, thereby improving data write performance. In addition, in this embodiment of this application, when searching for another available memory page, the first thread directly starts, based on the page binary tree, searching from a next memory page of an available memory page on which a lock fails to be acquired currently. This shortens search time compared with re-searching starting from the root node of the page binary tree.

In addition, in this embodiment of this application, the first thread does not need to wait to extend the data table until the last idle memory page is used up, but may directly trigger the data table extension procedure when a write lock on a found available memory page fails to be acquired a plurality of times and a quantity of failures exceeds a reference threshold. In other words, in this embodiment of this application, data table extension may be triggered in advance when the data table still has a small quantity of idle memory pages. On this basis, data table extension is performed by different threads at different time, instead of being performed by one thread, where the other threads wait in a centralized manner. In this way, data table extension efficiency can be improved, thread waiting duration can be shortened, and a data write speed can be increased.

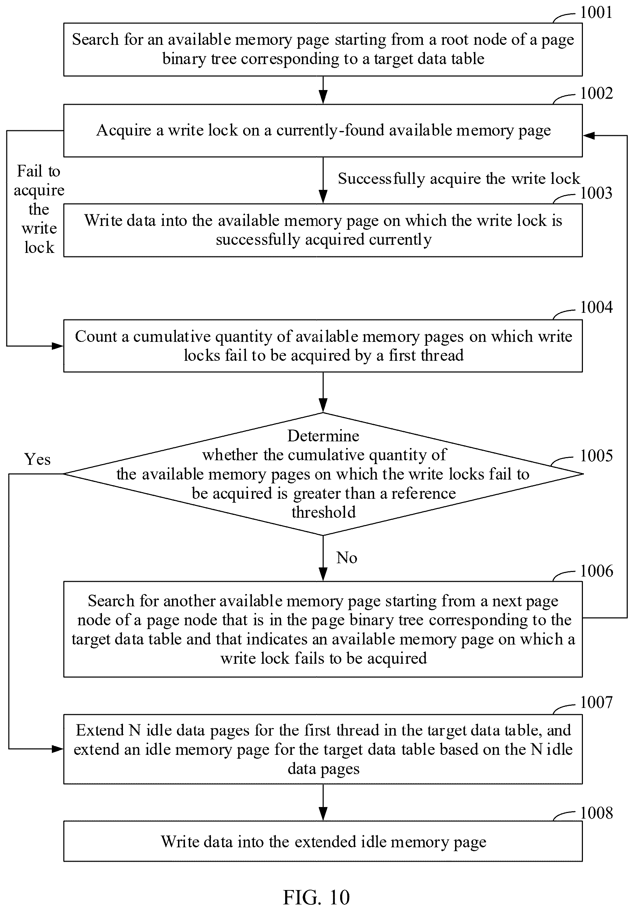

With reference to the data write methods described in the embodiments shown in FIG. 4 and FIG. 8, an embodiment of this application further provides a detailed example of a data write method. As shown in FIG. 10, the method includes the following steps.

Step 1001: Search for an available memory page starting from a root node of a page binary tree corresponding to a target data table.

For an implementation of this step, refer to the implementation of step 801 in the foregoing embodiment.

Step 1002: Acquire a write lock on a currently-found available memory page. If the write lock is successfully acquired, step 1003 is performed. If the write lock fails to be acquired, step 1004 is performed.

For an implementation of this step, refer to related descriptions of step 401 in the foregoing embodiment.

Step 1003: Write data into the available memory page on which the write lock is successfully acquired currently.

Step 1004: Count a cumulative quantity of available memory pages on which write locks fail to be acquired by a first thread.

Step 1005: Determine whether the cumulative quantity of the available memory pages on which the write locks fail to be acquired is greater than a reference threshold. If the cumulative quantity is not greater than the reference threshold, step 1006 is performed. If the cumulative quantity is greater than the reference threshold, step 1007 is performed.

Step 1006: Search for another available memory page starting from a next page node of a page node that is in the page binary tree corresponding to the target data table and that indicates an available memory page on which a write lock fails to be acquired, and then return to perform step 1002.

Step 1007: Extend N idle data pages for the first thread in the target data table, and extend an idle memory page for the target data table based on the N idle data pages.

For an implementation of this step, refer to the related implementations of step 401 and step 402 in the foregoing embodiment.

Step 1008: Write data into the extended idle memory page.

For an implementation of this step, refer to the related implementation of step 403 in the foregoing embodiment.

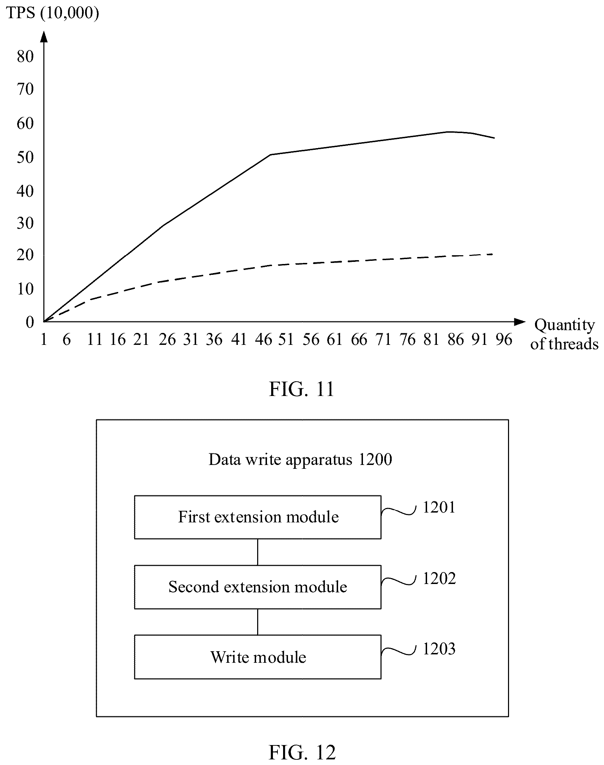

FIG. 11 is a diagram of comparison curves of data write performance obtained through testing in a data write scenario. In this data write scenario, a size of data to be written by each transaction thread is 0.75 KB, an amount of data written into a same data table per second is 300 MB, a CPU of a computer device includes 48 physical cores, and a maximum of 96 transaction threads can be concurrently executed. Based on this, when data is written by using a method in a related technology, a relationship between a quantity of concurrent threads and a transaction per second (transaction per second, TPS) is shown by a dashed line in FIG. 11. When data is written by using the data write method provided in embodiments of this application, a relationship between a quantity of concurrent threads and a TPS is shown by a solid line in FIG. 11. The TPS is a quantity of transactions that can be processed per second, and one transaction is used to write one piece of data. Therefore, the TPS may indicate an amount of data written per second. It can be learned that, in a scenario in which a large amount of data is concurrently written into a single table, compared with the data write method in the related technology, the data write method provided in embodiments of this application significantly improves data write performance.

The following describes the data write apparatus provided in embodiments of this application.

FIG. 12 is a diagram of a structure of a data write apparatus 1200 according to an embodiment of this application. The apparatus may be deployed in a computer device, for example, may be deployed in each server in the storage system shown in FIG. 1, or may be deployed in each compute node in the storage system shown in FIG. 3. As shown in FIG. 12, the data write apparatus 1200 may include a first extension module 1201, a second extension module 1202, and a write module 1203.

The first extension module 1201 is configured to perform step 401 in the foregoing embodiment by using a first thread.

The second extension module 1202 is configured to perform step 402 in the foregoing embodiment by using the first thread.

The write module 1203 is configured to perform step 403 in the foregoing embodiment by using the first thread.

Optionally, the first extension module 1201 is specifically configured to: acquire a write lock on a target data table; if the write lock on the target data table is successfully acquired, apply for N extended storage areas for the target data table in a persistent storage device; write 0 into the N extended storage areas to obtain N idle data pages; and release the write lock on the target data table.

Optionally, the second extension module 1202 is specifically configured to: allocate corresponding memory pages to the N idle data pages; and update, based on the corresponding memory pages of the N idle data pages, a page binary tree corresponding to the target data table, where the page binary tree corresponding to the target data table includes a plurality of page nodes, and each page node indicates one idle memory page corresponding to the target data table.

Optionally, the second extension module 1202 is specifically configured to: acquire a write lock on the page binary tree corresponding to the target data table; if the write lock on the page binary tree corresponding to the target data table is successfully acquired, add, to the page binary tree corresponding to the target data table, page nodes corresponding to the corresponding memory pages of the N idle data pages; and release the write lock on the page binary tree corresponding to the target data table.

Optionally, the apparatus 1200 further includes: a search module, configured to search, by using the first thread, a plurality of idle memory pages corresponding to the target data table for an available memory page; a counting module, configured to: if a write lock on a currently-found available memory page fails to be acquired, count, by using the first thread, a cumulative quantity of available memory pages on which write locks fail to be acquired; and a determining module, configured to: if the cumulative quantity of the available memory pages on which the write locks fail to be acquired is greater than a reference threshold, determine that the first thread fails to obtain the available memory page from the plurality of idle memory pages corresponding to the target data table.

In this embodiment of this application, when any thread in the computer device obtains no available memory page from the plurality of idle memory pages corresponding to the target data table, the thread may extend N idle data pages for the thread, extend an idle memory page based on the N idle data pages, and write data into the extended idle memory page. It can be learned that any thread that fails to obtain an available memory page may automatically trigger a data table extension procedure to extend the N data pages for the thread in time for use by the thread. In addition, because no data page needs to be extended for another thread, duration required by each thread to extend a data page is short. In comparison with a solution in which one thread centrally extends data pages for all threads that obtain no available memory page while all other threads wait, this can shorten thread blocking duration.

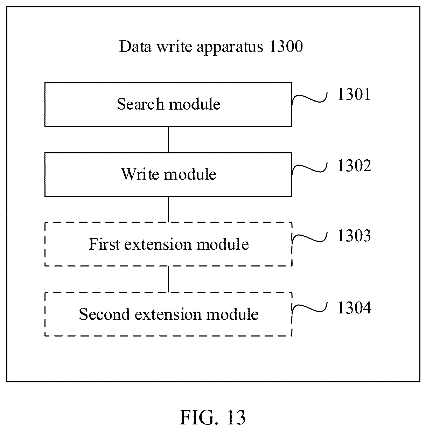

FIG. 13 is a diagram of a structure of a data write apparatus 1300 according to an embodiment of this application. The apparatus may be deployed in a computer device, for example, may be deployed in each server in the storage system shown in FIG. 1, or may be deployed in each compute node in the storage system shown in FIG. 3. As shown in FIG. 13, the data write apparatus includes a search module 1301 and a write module 1302.

The search module 1301 is configured to perform steps 801 and 802 in the foregoing embodiment by using a first thread.

The write module 1302 is configured to perform step 803 in the foregoing embodiment by using the first thread.

Optionally, the search module 1301 is specifically configured to: search for a target page node starting from a next page node of a first page node in a page binary tree corresponding to a target data table, where the page binary tree corresponding to the target data table includes a plurality of page nodes, each page node indicates one idle memory page corresponding to the target data table, the first page node indicates an available memory page on which a lock fails to be acquired currently, and a remaining capacity of an idle memory page indicated by the target page node is not less than a data amount of to-be-written data; and use, as another available memory page, the idle memory page indicated by the target page node.

Optionally, the search module 1301 is specifically configured to: if a write lock on a currently-found available memory page fails to be acquired, count a cumulative quantity of available memory pages on which write locks fail to be acquired; and if the cumulative quantity of the available memory pages on which the write locks fail to be acquired is not greater than a reference threshold, search a plurality of idle memory pages for the another available memory page.

Refer to FIG. 13. Optionally, the apparatus 1300 may further include: a first extension module 1303, configured to: if the cumulative quantity of the available memory pages on which the write locks fail to be acquired is greater than the reference threshold, extend N idle data pages for the first thread in the target data table by using the first thread; and a second extension module 1304, configured to: allocate corresponding memory pages to the N idle data pages by using the first thread; and update, based on the corresponding memory pages of the N idle data pages, the page binary tree corresponding to the target data table, where the page binary tree corresponding to the target data table includes the plurality of page nodes, and each page node indicates the one idle memory page corresponding to the target data table.

Optionally, the first extension module 1303 is specifically configured to: acquire a write lock on the target data table; if the write lock on the target data table is successfully acquired, apply for N extended storage areas for the target data table in a persistent storage device; write 0 into the N extended storage areas to obtain N idle data pages; and release the write lock on the target data table.

Optionally, the second extension module 1304 is specifically configured to: acquire a write lock on the page binary tree corresponding to the target data table; if the write lock on the page binary tree corresponding to the target data table is successfully acquired, add, to the page binary tree corresponding to the target data table, page nodes corresponding to the corresponding memory pages of the N idle data pages; and release the write lock on the page binary tree corresponding to the target data table.

In this embodiment of this application, the computer device may search, by using the first thread, the plurality of idle memory pages corresponding to the target data table for the available memory page. If the write lock on the currently-found available memory page fails to be acquired, it indicates that another thread is accessing the available memory page. In this case, the first thread does not wait for the another thread to release the lock on the available memory page, but directly searches the plurality of idle memory pages for the another available memory page, and writes the data into another available memory page on which a write lock is successfully acquired. This can shorten waiting time of the first thread, thereby improving data write performance.

It should be noted that module division in the data write apparatus provided in the foregoing embodiments is an example, and is merely logical function division. During actual implementation, there may be another division manner. In addition, functional modules in embodiments of this application may be integrated into one processor, each of the modules may exist alone physically, or two or more modules may be integrated into one module. The integrated module may be implemented in a form of hardware, or may be implemented in a form of software functional module.

If the integrated module is implemented in the form of software functional module and is sold or used as an independent product, the integrated module may be stored in a computer-readable storage medium. Based on such an understanding, the technical solutions in embodiments of this application essentially, or the part contributing to the conventional technology, or all or a part of the technical solutions may be implemented in a form of software product. The computer software product is stored in a storage medium and includes several instructions for instructing a network device (which may be a router or a switch) or a processor (processor) to perform all or a part of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a diskette, or an optical disc.

In addition, the data write apparatus provided in the foregoing embodiments belongs to a same concept as the data write method embodiment. For a specific implementation process, refer to the method embodiment. Details are not described herein again.

All or a part of the foregoing embodiments may be implemented by using software, hardware, firmware, or any combination thereof. When software is used to implement the embodiments, all or a part of the embodiments may be implemented in a form of computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a tape), an optical medium (for example, a digital versatile disc (digital versatile disc, DVD)), or a semi-conductive medium (for example, a solid-state disk (solid state disk, SSD)).

## Claims

1. A data write method, applied to a first thread in a computer device, wherein the first thread is any one of a plurality of threads that run in the computer device and that are to write data, and the method comprises:
if no available memory page is obtained from a plurality of idle memory pages corresponding to a target data table, extending N idle data pages for the first thread in the target data table, wherein N is a preset integer greater than 0;
extending an idle memory page for the target data table based on the N idle data pages; and
writing data into the extended idle memory page.

2. The method according to claim 1, wherein extending the N idle data pages for the first thread in the target data table comprises:
acquiring a write lock on the target data table;
if the write lock on the target data table is successfully acquired, applying for N extended storage areas in a persistent storage device for the target data table;
writing 0 into the N extended storage areas, to obtain the N idle data pages; and
releasing the write lock on the target data table.

3. The method according to claim 1 or 2, wherein extending the idle memory page for the target data table based on the N idle data pages comprises:
allocating corresponding memory pages to the N idle data pages; and
updating, based on the corresponding memory pages of the N idle data pages, a page binary tree corresponding to the target data table, wherein the page binary tree corresponding to the target data table comprises a plurality of page nodes, and each page node indicates one idle memory page corresponding to the target data table.

4. The method according to claim 3, wherein updating, based on the corresponding memory pages of the N idle data pages, the page binary tree corresponding to the target data table comprises:
acquiring a write lock on the page binary tree corresponding to the target data table;
if the write lock on the page binary tree corresponding to the target data table is successfully acquired, adding, to the page binary tree corresponding to the target data table, page nodes corresponding to the corresponding memory pages of the N idle data pages; and
releasing the write lock on the page binary tree corresponding to the target data table.

5. The method according to any one of claims 1 to 4, wherein the method further comprises:
searching the plurality of idle memory pages corresponding to the target data table for an available memory page;
if a write lock on a currently-found available memory page fails to be acquired, counting a cumulative quantity of available memory pages on which write locks fail to be acquired; and
if the cumulative quantity of the available memory pages on which the write locks fail to be acquired is greater than a reference threshold, determining that no available memory page is obtained from the plurality of idle memory pages corresponding to the target data table.

6. A data write method, applied to a first thread in a computer device, wherein the first thread is any one of a plurality of threads that run in the computer device and that are to write data, and the method comprises:
searching a plurality of idle memory pages corresponding to a target data table for an available memory page;
searching the plurality of idle memory pages for another available memory page if a write lock on a currently-found available memory page fails to be acquired; and
writing data into another available memory page on which a write lock is successfully acquired.

7. The method according to claim 6, wherein searching the plurality of idle memory pages for the another available memory page comprises:
searching for a target page node starting from a next page node of a first page node in a page binary tree corresponding to the target data table, wherein the page binary tree corresponding to the target data table comprises a plurality of page nodes, each page node indicates one idle memory page corresponding to the target data table, the first page node indicates an available memory page on which a lock fails to be acquired currently, and a remaining capacity of an idle memory page indicated by the target page node is not less than a data amount of to-be-written data; and
using, as the another available memory page, the idle memory page indicated by the target page node.

8. The method according to claim 6 or 7, wherein searching the plurality of idle memory pages for the another available memory page if the write lock on the currently-found available memory page fails to be acquired comprises:
if the write lock on the currently-found available memory page fails to be acquired, counting a cumulative quantity of available memory pages on which write locks fail to be acquired; and
if the cumulative quantity of the available memory pages on which the write locks fail to be acquired is not greater than a reference threshold, searching the plurality of idle memory pages for the another available memory page.

9. The method according to claim 8, wherein the method further comprises:
if the cumulative quantity of the available memory pages on which the write locks fail to be acquired is greater than the reference threshold, extending N idle data pages for the first thread in the target data table;
allocating corresponding memory pages to the N idle data pages; and
updating, based on the corresponding memory pages of the N idle data pages, a page binary tree corresponding to the target data table, wherein the page binary tree corresponding to the target data table comprises a plurality of page nodes, and each page node indicates one idle memory page corresponding to the target data table.

10. The method according to claim 9, wherein extending the N idle data pages for the first thread in the target data table comprises:
acquiring a write lock on the target data table;
if the write lock on the target data table is successfully acquired, applying for N extended storage areas in a persistent storage device for the target data table;
writing 0 into the N extended storage areas, to obtain the N idle data pages; and
releasing the write lock on the target data table.

11. The method according to claim 9 or 10, wherein updating, based on the corresponding memory pages of the N idle data pages, the page binary tree corresponding to the target data table comprises:
acquiring a write lock on the page binary tree corresponding to the target data table;
if the write lock on the page binary tree corresponding to the target data table is successfully acquired, adding, to the page binary tree corresponding to the target data table, page nodes corresponding to the corresponding memory pages of the N idle data pages; and
releasing the write lock on the page binary tree corresponding to the target data table.

12. A data write apparatus, wherein the apparatus comprises:
a first extension module, configured to: if no available memory page is obtained from a plurality of idle memory pages corresponding to a target data table, extend N idle data pages for a first thread in the target data table by using the first thread, wherein N is a preset integer greater than 0, and the first thread is any one of a plurality of threads that run in a computer device and that are to write data;
a second extension module, configured to extend an idle memory page for the target data table based on the N idle data pages by using the first thread; and
a write module, configured to write data into the extended idle memory page by using the first thread.

13. The apparatus according to claim 12, wherein the first extension module is specifically configured to:
acquire a write lock on the target data table;
if the write lock on the target data table is successfully acquired, apply for N extended storage areas in a persistent storage device for the target data table;
write 0 into the N extended storage areas, to obtain the N idle data pages; and
release the write lock on the target data table.

14. The apparatus according to claim 12 or 13, wherein the second extension module is specifically configured to:
allocate corresponding memory pages to the N idle data pages; and
update, based on the corresponding memory pages of the N idle data pages, a page binary tree corresponding to the target data table, wherein the page binary tree corresponding to the target data table comprises a plurality of page nodes, and each page node indicates one idle memory page corresponding to the target data table.

15. The apparatus according to claim 14, wherein the second extension module is specifically configured to:
acquire a write lock on the page binary tree corresponding to the target data table;
if the write lock on the page binary tree corresponding to the target data table is successfully acquired, add, to the page binary tree corresponding to the target data table, page nodes corresponding to the corresponding memory pages of the N idle data pages; and
release the write lock on the page binary tree corresponding to the target data table.

16. The apparatus according to any one of claims 12 to 15, wherein the apparatus further comprises:
a search module, configured to search, by using the first thread, the plurality of idle memory pages corresponding to the target data table for an available memory page;
a counting module, configured to: if a write lock on a currently-found available memory page fails to be acquired, count, by using the first thread, a cumulative quantity of available memory pages on which write locks fail to be acquired; and
a determining module, configured to: if the cumulative quantity of the available memory pages on which the write locks fail to be acquired is greater than a reference threshold, determine that the first thread fails to obtain the available memory page from the plurality of idle memory pages corresponding to the target data table.

17. A data write apparatus, wherein the apparatus comprises:
a search module, configured to: search, by using a first thread, a plurality of idle memory pages corresponding to a target data table for an available memory page; and search the plurality of idle memory pages for another available memory page if a write lock on a currently-found available memory page fails to be acquired, wherein the first thread is any one of a plurality of threads that run in a computer device and that are to write data; and
a write module, configured to write, by using the first thread, data into another available memory page on which a write lock is successfully acquired.

18. The apparatus according to claim 17, wherein the search module is specifically configured to:
search for a target page node starting from a next page node of a first page node in a page binary tree corresponding to the target data table, wherein the page binary tree corresponding to the target data table comprises a plurality of page nodes, each page node indicates one idle memory page corresponding to the target data table, the first page node indicates an available memory page on which a lock fails to be acquired currently, and a remaining capacity of an idle memory page indicated by the target page node is not less than a data amount of to-be-written data; and
use, as the another available memory page, the idle memory page indicated by the target page node.

19. The apparatus according to claim 17 or 18, wherein the search module is specifically configured to:
if the write lock on the currently-found available memory page fails to be acquired, count a cumulative quantity of available memory pages on which write locks fail to be acquired; and
if the cumulative quantity of the available memory pages on which the write locks fail to be acquired is not greater than a reference threshold, search the plurality of idle memory pages for the another available memory page.

20. The apparatus according to claim 19, wherein the apparatus further comprises:
a first extension module, configured to: if the cumulative quantity of the available memory pages on which the write locks fail to be acquired is greater than the reference threshold, extend N idle data pages for the first thread in the target data table by using the first thread; and
a second extension module, configured to: allocate corresponding memory pages to the N idle data pages by using the first thread; and update, based on the corresponding memory pages of the N idle data pages, the page binary tree corresponding to the target data table, wherein the page binary tree corresponding to the target data table comprises the plurality of page nodes, and each page node indicates the one idle memory page corresponding to the target data table.

21. The apparatus according to claim 20, wherein the first extension module is specifically configured to:
acquire a write lock on the target data table;
if the write lock on the target data table is successfully acquired, apply for N extended storage areas in a persistent storage device for the target data table;
write 0 into the N extended storage areas, to obtain the N idle data pages; and
release the write lock on the target data table.

22. The apparatus according to claim 20 or 21, wherein the second extension module is specifically configured to:
acquire a write lock on the page binary tree corresponding to the target data table;
if the write lock on the page binary tree corresponding to the target data table is successfully acquired, add, to the page binary tree corresponding to the target data table, page nodes corresponding to the corresponding memory pages of the N idle data pages; and
release the write lock on the page binary tree corresponding to the target data table.

23. A computer device, wherein the computer device comprises a processor and a storage, the storage stores at least one program instruction or code, and the processor is configured to execute the at least one program instruction or code, to implement the data write method according to any one of claims 1 to 5 or claims 6 to 11.

24. A computer-readable storage medium, wherein the computer-readable storage medium stores instructions, and when the instructions are run on a computer device, the computer device is enabled to perform the data write method according to any one of claims 1 to 5 or claims 6 to 11.
